# EUROPEAN PATENT APPLICATION

(11) **EP 2 131 166 A1**
(43) Date of publication of application: **09.12.2009**
(21) Application number: 08388020.3
(22) Date of filing: 03.06.2008
(51) Int. Cl.: G01G 13/18, G01G 19/393

(54) **Load measuring device**

(71) Applicant: Bilwinco A/S, 8660 Skanderborg (DK)
(72) Inventor: Widmer, Hans Peter, 8370 Hadsten (DK); Thomsen, Peter, 8220 Brabrand (DK)
(74) Representative: Sundien, Thomas

(57) **Abstract**

The present invention, in general, relates to a load device for use in e.g. a weighing apparatus. The load device comprises a load support, such as a container fastened to one side of a load surface and at least one load cell (such as a strain gauge) fastened to a second side of the load surface in the proximity of the fastening point of the load support. Hereby e.g. the weight of a load placed on the load support can be determined by measuring the deformation in the load surface using the load cell fastened to the second side of the load surface.

## Description

### FIELD OF THE INVENTION

The present invention, in general, relates to a load device principle for use in e.g. a weighing apparatus.

### BACKGROUND OF THE INVENTION

The industry, such as the food and non-food industry, is faced with an increasing number of performance measures for example in relation to costs, output, precision and hygiene.

Hygiene relates to the many important aspects, such as avoiding bacteria, viruses and contamination in general from e.g. the raw materials, the production facilities and employees. In industries with hygienic demands the production equipment is normally designed so that it is easy to keep clean. Hence, in for example the food industry, unnecessary and unreachable cavities are avoided so that food cannot 'hide' and bacteria's develop. To give the best conditions for producing a desired product and obtain a cleanable environment, the production facilities are often made in materials such as stainless steel and manufactured with fine (grained) surface properties. Good conditions are also obtained by having continuous surfaces, albeit these can be difficult to realize in production facilities where various (raw) materials are moved, added, divided, and treated (e.g. heating, cooling, boiling, freezing). Hygienic demands do therefore not always coincide with demands on the products produced.

Another aspect is, as mentioned, precision, which also holds multiple facets. In general, precision concerns ensuring that e.g. intermediate or end products are consistent in relation to a desired quality and/or quantity. For instance, that the right materials and the right amount of these are mixed and treated under the right conditions according to a given recipe on e.g. a drug. A further example could be products measured continuously, so that the most optimum weight portion of the end product is obtained. In respect to this, preciseness is important for two primary reasons, which are not to 'cheat' the consumer and not to produce product 'give-a-ways'.

In industry, different weighing apparatus' have been applied. Some of the solutions provided try to apply sensitive (high) precision weighing equipment in harsh production environments. This is problematic as the weighing equipment is sensitive to spillovers from the products produced and to the cleaning operations necessary for hygienic reasons. Conversely, the products produced can be sensitive to potential contamination from e.g. the bacteria that can grow in the weighing equipment. In the prior art this has been attempted solved by e.g. placing the weighing equipment, such as a dynamometer, in a hollow body comprising a pressurized gas such that e.g. fluids or other materials from the production or from cleaning operations cannot enter the hollow body and thereby damage the equipment. In another embodiment weighing equipment comprising strain gauges is arranged on an arm comprising a weighing container. Again this is disadvantageous, as the strain gauges are very sensitive to the environment in which they are placed and further that wires connecting the strain gauges create ports wherein e.g. spillovers from the production can enter resulting in e.g. hygiene problems.

### OBJECT AND SUMMARY OF THE INVENTION

The objective of the present invention is to solve the above mentioned problems.

The present invention provides a load device comprising a load support characterized in that the load support is fastened to a load surface, wherein the deformation in the load surface is used to identify the load of an item placed on the load support. The advantage of this simple construction is that the load of the item placed on the load support can be determined in the load surface. Further, the equipment determining this load can be separated from the load support, which is a tremendous advantage from the viewpoint of hygiene.

In another embodiment a load device is characterized in that the deformation in the load surface is used to determine the weight of a load placed on the load support. The advantages of this embodiment are as described above, that is by simply measuring the deformation in the support surface on which the load support is fastened whereby the weight of a load placed on the load support can be determined.

In a further embodiment a load device is characterized in that the deformation in the load surface is determined by means of at least one load cell. This is advantageous, as load cells are well suited in determining the deformation in the load surface. This, among others, because load cells, comprising strain gauges, can register even very small deformations, which is e.g. advantageous in regard to preciseness of the measurement.

In yet another embodiment a load device is characterized in that the load surface comprises a first side and a second side, where the load support is fastened to the first side of the load surface and at least one load cell is fastened to the second side of the load surface. The advantage of this embodiment is that the equipment used to obtain a measurement of the deformation in the load surface is separated from the load placed on the load support. Again this is very advantageous from the viewpoint of hygiene, meaning that bacteria cannot 'hide' and grow in cavities of this equipment and the load support can be cleaned without damaging this equipment. Further, as this measuring equipment is separated from the load support, it is not inappropriately influenced by the environment in which the load support can be placed.

In another embodiment a load device is characterized in that at least one load cell is fastened to the second side of the load surface in an area surrounding the fastening point of the load support to the first side of the load surface. By placing the load cell, e.g. comprising at least one strain gauge, in an area surrounding the fastening point of the load support the load can be advantageously determined as the deformation in the load surface will be greatest in this area.

In a further embodiment a load device is characterized in that the load surface comprises a reduced thickness from the second side of the load surface in an area surrounding the fastening point of the load support to the first side of the load surface. This is an advantage as the area of reduced thickness will have a greater deformation than the area with a non-reduced thickness. The deformation in this area can therefore easily be determined by the load cells. Further, the material thickness of the reduced area can advantageously be varied according to e.g. the size of the loads or the preciseness of the load cells.

In yet another embodiment a load device is characterized in that the load cell comprises four strain gauges, and where the strain gauges are connected according to a full bridge method. This is a very advantageous number of strain gauges, as they, in this full bridge connection, can measure the deformation in the load surface even though there might be 'noise' from e.g. fluctuation in the temperature.

In another embodiment a load device comprises an overload protection device for limiting the deformation of the load surface by mechanically limiting the deflection of the load support. This is advantageous as this overload protection device protects both the load cells from breaking and the load surface from permanent deformation, both in the areas with and without reduced material thickness.

In a further embodiment a load device is characterized in that the overload protection device comprises at least one bar fastened to the second side of the load surface in the fastening point of the load support to the first side of the load surface, and wherein the deflection of the bar is limited by an assembly fastened to the second side of the load surface. Apart from the advantages mentioned above this embodiment is also advantageous as the overload protection device is placed separated from the load support, accommodating the above mentioned hygienic issues and the potential problems related to the inappropriate influence of the environment in which the load support can be placed.

In yet another embodiment a load device is characterized in that the load support is a container. Here the advantages are as mentioned above.

In another embodiment a load device is characterized in that the load support is a plate. Here the advantages are as mentioned above. Further, such a plate could easily be built into e.g. a conveyer system for various purposes such as a counting device.

In a further embodiment a load device is characterized in that the load support comprises a slope that focuses an item placed on the load support. This is advantageous as the item placed on the load support will be focused in a desired area of the load support, whereby a measurement of the load can be obtained.

In yet another embodiment a load device is characterized in that the container comprises a device for emptying the content of the container. This is a particular advantage in the process industry where items, such as food or the like, are moved, treated and processed continuously.

In another embodiment the present invention concerns a method for measuring the load of an item placed on a load support fastened in a fastening point to a first side of a load surface, wherein the load distribution is measured by at least one strain gauge fastened to a second side of the load surface in an area surrounding the fastening point of the load support.
Here the advantages are as mentioned above.

### BRIEF DESCRIPTION OF THE DRAWINGS

In the following, preferred embodiments of the invention will be described referring to the figures, where
figure 1 illustrates a weighing machine used in the process industry;
figure 2 illustrates a perspective of a weighing device according to the present invention;
figure 3 illustrates a side view of a weighing device according to the present invention;
figure 4a and 4b illustrate a perspective of a part of a weighing apparatus comprising the weighing device according to the present invention;
figure 5 illustrates a perspective of a part/section of a weighing machine/station comprising a number of weighing devices according to the present invention;
figure 6a and 6b illustrate a weighing device according to the present invention comprising a non-container;
figure 7a and 7b illustrate a weighing device comprising a overload protection device.

### DESCRIPTION OF EMBODIMENTS

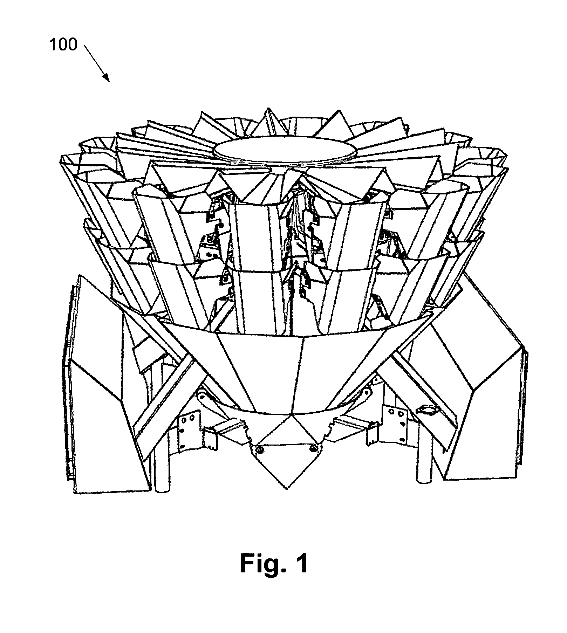

Figure 1 illustrates a weighing machine used in the process industry. The weighing machine 100 comprises a number of containers in which an item can be weighed. The item to be weighed is supplied from the top of the machine and distributed arbitrarily in the containers. The containers can be emptied separately, whereby the item can be moved to the bottom of the weighing machine and optionally moved to e.g. another station or into packaging.

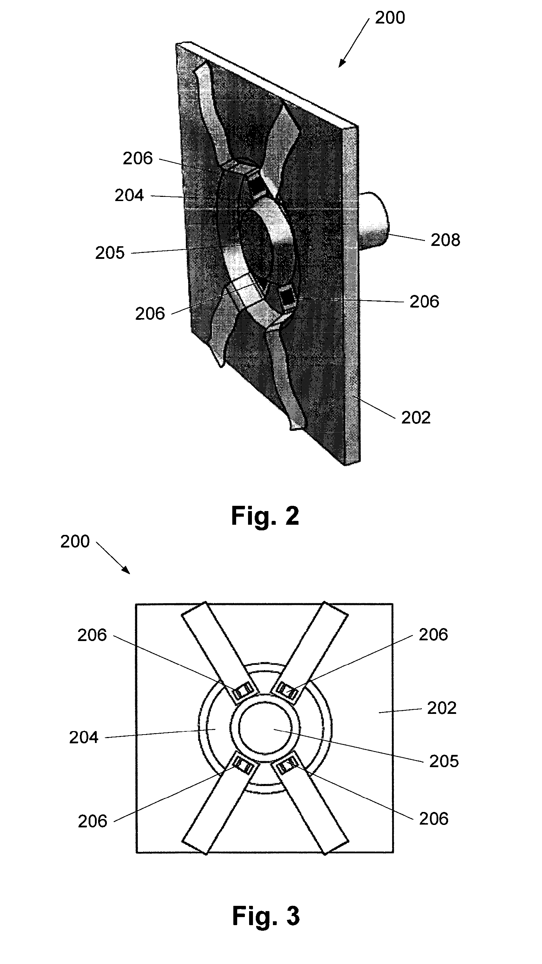

Figure 2 illustrates a perspective of a weighing device 200 according to the present invention. The weighing device 200 comprises a mounting plate 202, a load cell comprising a number of strain gauges 206, and an arm 208. The mounting plate 202 further comprises a deformation zone 204, where the load cell has been fastened. The deformation zone 204 has a smaller thickness compared to the thickness of the mounting plate 202 and has in this particular embodiment a circular geometry. Further, in the illustrated embodiment, the centre of the deformation zone 205 has a thickness similar to the one of the mounting plate 202. However, the thickness of the centre of deformation zone 205 may vary from embodiment to embodiment. Opposite the centre of the deformation zone 205, the arm 208 is fastened or mounted onto the mounting plate 202. The arm 208 can comprise e.g. a container, a plate or the like, of which the contained weight is to be determined. When a vertical force is applied on the arm 208, from e.g. the content of a container mounted on the arm 208, this force will due to the length of the arm 208 create a momentum in the mounting plate 202. This momentum is exerted around a horizontal axis through the centre of the centre of the deformation zone 205. The momentum creates a deformation in the deformation zone 204 of the mounting plate 202. By using the load cell to measure the deformation in the deformation zone 204, the size of this momentum can be determined, which again can be used to calculate vertical force applied to the arm 208. Hereby the weight of an item placed in e.g. a container can be determined. In this embodiment the mounting plate 202 constitutes a weighing surface.

Figure 3 illustrates a side view of a weighing device 200 according to the present invention. The weighing device 200 is embodied as the one described in figure 2. The load cell comprises four strain gauges 206 which are fastened at the deformation zone 204 symmetrically relative to a horizontal and a vertical axis through the centre of the centre of the deformation zone 205. Thus, the strain gauges 206 constitute each corner of a rectangle. The position of the four strain gauges 206 enables a connection of the strain gauge according to the (active) full bridge method. This is particularly advantageous as this method compensates for e.g. the temperature effect. The deformation zone 204 of the mounting plate 202 could have different shapes and sizes thereof. The strain gauges 206 could also vary in number and the connections between these vary correspondingly, using e.g. the quarter bridge or half bridge methods. The thickness of both the deformation zone 204 and the mounting plate 202 can vary according to the loads exerted on the weighing device 200. The measurement of the deformation in the deformation zone 204 could also be obtained by the use of capacitive sensors or e.g. by use of optical means.

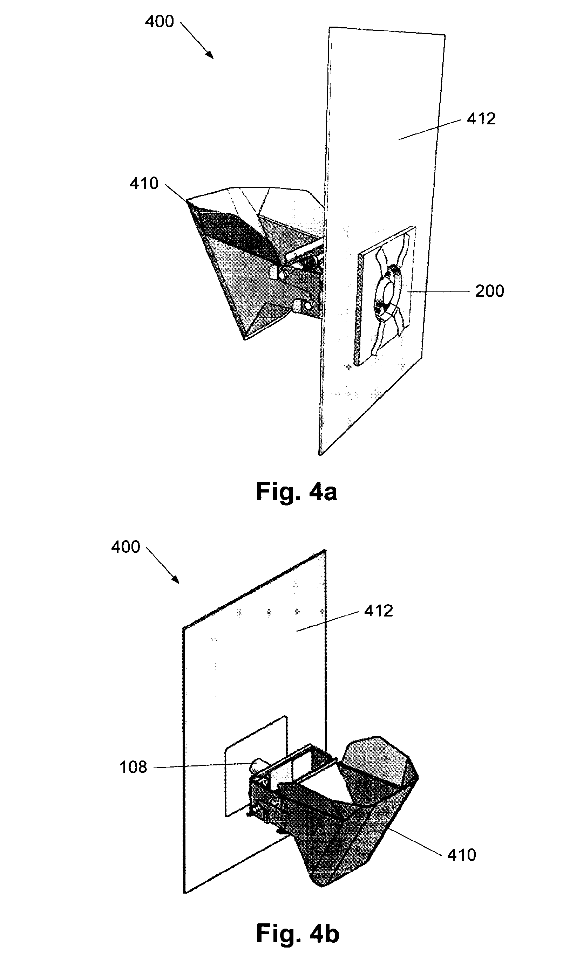

Figure 4a and 4b illustrate a perspective of a part of a weighing apparatus comprising the weighing device 200 according to the present invention. The weighing device is mounted on a separating plate 412, which separates the sensitive load cell of the weighing device 200 from the weighing container unit 410. The weighing container unit 410 can be filled from the top (not indicated) and emptied by moving one of the sides (not indicated) in the V-shaped container or by tilting the whole container around an axis. The weighing apparatus can easily constitute a part of an entire production line, where a continuous number of batches are to be weighed. As the weighing surface of the weighing device 200 is integrated into the separating plate 412 of the weighing apparatus 400, the load cell (not indicated) is physically separated from the environment of the product weighed. Thereby a suitable environment for the load cell (not indicated) and other equipment (not shown) can be established. Consequently, cleaning operations of e.g. the weighing container unit 410 will not affect the functionality and reliability of the load cell placed on the other side of the weighing surface. The weighing device 200 is, for illustrative purposes, depicted as a separate unit fastened to the separating plate 412. The weighing device could, however, also be fully integrated into the separating plate 412, whereby the separating plate would constitute a continuous surface.

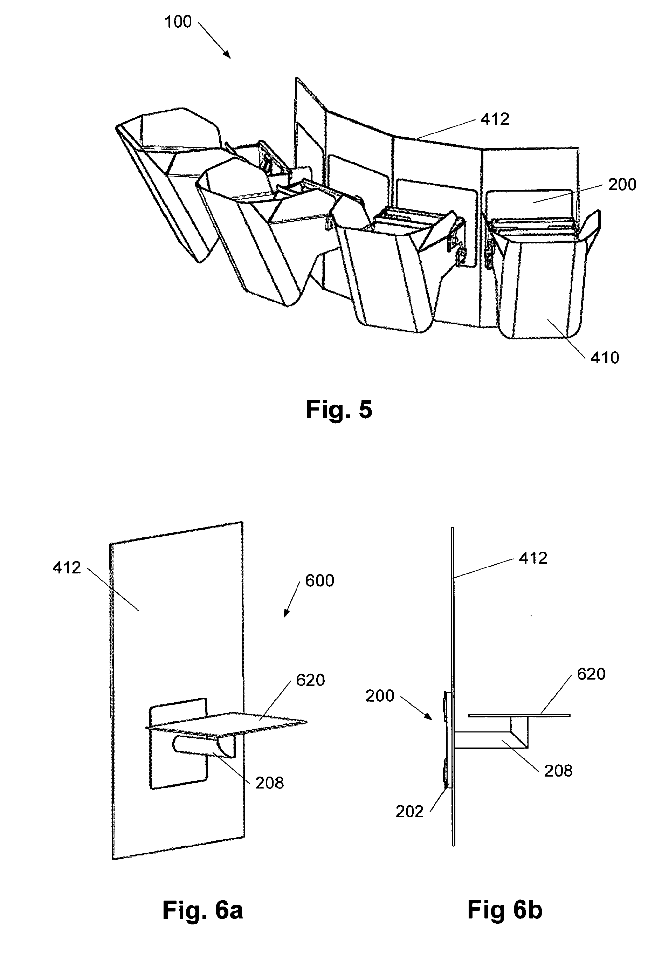

Figure 5 illustrates a perspective of a section of a weighing machine 100 comprising a number of weighing devices 200 according to the present invention. The separating plate 412 constitutes, in this view, a part of the circumference of a cylinder or cylinder-like part of the weighing machine. The load cell (not indicated) and other parts of the weighing devices 200 can hereby be separated from the equipment placed in the production environment. The weighing machine 100 could comprise a plurality of weighing containers 410 and a corresponding number of weighing devices 200. Such a weighing machine 100 would have the capacity to carry out many simultaneous measurements of the weight of materials led into and placed in the containers 410.

Figure 6a and 6b illustrate a weighing device 600 according to the present invention comprising a weighing plate 620. The mounting plate 202 of the weighing device 200 is fastened to the separating plate 412, whereby the load cell (not indicated) and other equipment can be separated from the weighing plate 620. When an item is placed on the plate, the arm 208 will deflect and the deformation in the deformation zone (not indicated) can be measured and the weight of the item determined. The weighing device 600 is for illustrative purposes depicted as a separate unit fastened to the separating plate 412. The weighing device could, however, also be fully integrated into the separating plate 412, whereby the separating plate 412 would constitute a continuous surface. In an alternative embodiment, the plate 620 of the weighing device could be integrated in e.g. a conveyer belt to weigh items on the belt or as a counting unit counting the number of items passing by the plate 620. In yet another embodiment the weighing plate 620 or the container unit 410 could comprise a slope that would focus the item placed on the weighing plate 620 or in the container unit 410.

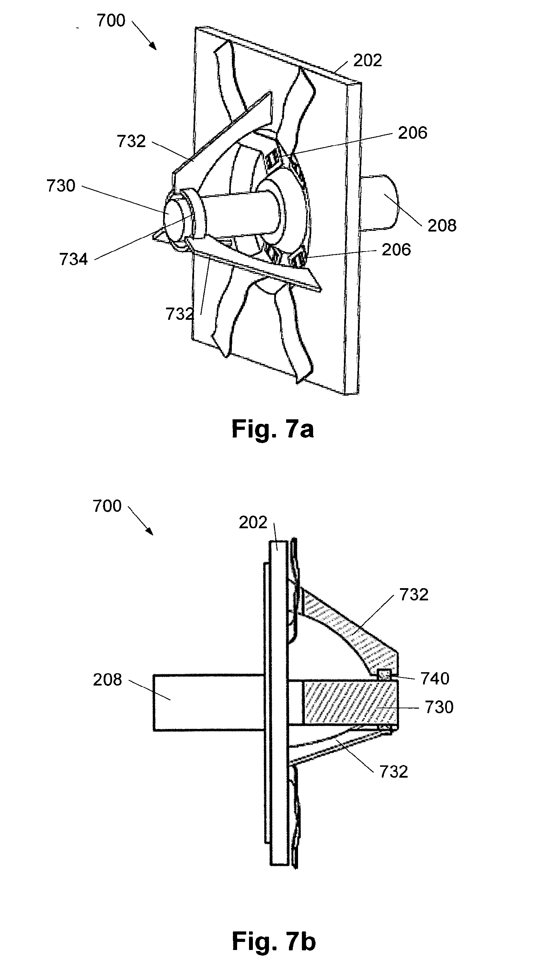

Figure 7a and 7b illustrate a weighing device comprising an overload protection device 700. The weighing device 700 has the same functionality as the weighing device 200 described in the figures 2-6 in terms of measuring the deformation by means of the strain gauges 206 in the deformation zone 204. A bar 730 extends from and is fastened to the centre of the deformation zone (not indicated). The bar 730 is surrounded by a tripod-like construction comprising foot 732 and ring 734. The ring 734 strengthens the overload protection device. In the part of the foot 732 facing the bar 730, a pin 740 is fastened in a recess of the bar. The pin 740 is sharpened in the end of the pin facing the bar 730. When the arm 208 deflects, the bar 730 will deflect correspondingly in a direction opposite to the direction of the arm 208. The deflection of the bar 730 is limited by the pin 740. Thus, when the bar 730 deflects to a certain degree, the pin 740 will stop the movement of the bar 730. As the deflection of the bar 730 is caused by the deflection of the arm 208, the deflection of the arm 208 is limited to the clearance between the bar 730 and the pin 740. The purpose of this limitation is to protect the strain gauges 206 from overload and prohibit a permanent deformation of the deformation zone (not indicated) to which the strain gauge 206 is fastened. By having a predetermined deformation range, it is possible to use more accurate strain gauges 206, and thereby obtain more precise measurements. This is possible because the strain gauges 206 are not subjected to an overload, as the deformation range is predefined. The protection device can also be embodied with varying number of foots 732 and different lengths of the bar 730. The pin 740 can also be placed anywhere along the bar 740. In another embodiment the pin could have a different shape or even be omitted. In the latter case, the foot 732 and ring 734 could constitute a deflection stop, either alone or in combination. The overload protection device could also be embodied such that the horizontal movement of the centre of the deformation zone (not indicated) is limited.

Such an overload protection device could be arranged on either or both sides of the mounting plate 202.

In an alternative embodiment the load device of the present invention could be used as e.g. a counting device or kitchen weight.

### REFERENCES

- 100: weighing machine
- 200: weighing device
- 202: mounting plate
- 204: deformation zone
- 205: centre of the deformation zone
- 206: strain gauge
- 208: arm
- 400: section of a weighing apparatus
- 410: weighing container unit
- 412: separating plate
- 600: weighing device
- 620: plate
- 700: weighing device with overload protection device
- 730: bar
- 732: foot
- 734: ring
- 740: pin

## Claims

1. A load device comprising a load support **characterized in that** said load support is fastened to a load surface, wherein the deformation in said load surface is used to identify the load of a load placed on said load support.

2. A load device according to claim 1, **characterized in that** said deformation in said load surface is used to determine the weight of a load placed on said load support.

3. A load device according to claims 1-2, **characterized in that** the deformation in said load surface is determined by means of at least one load cell.

4. A load device according to claims 1-3, **characterized in that** said load surface comprises a first side and a second side, where said load support is fastened to said first side of said load surface and said at least one load cell is fastened to said second side of said load surface.

5. A load device according to claims 1-4, **characterized in that** said at least one load cell is fastened to said second side of said load surface in an area surrounding the fastening point of said load support to said first side of said load surface.

6. A load device according to claims 1-5, **characterized in that** said load surface comprises a reduced thickness from said second side of said load surface in an area surrounding the fastening point of said load support to said first side of said load surface.

7. A load device according to claims 1-6, **characterized in that** said load cell comprises four strain gauges, and where said strain gauges are connected according to a full bridge method.

8. A load device according to claims 1-7, **characterized in that** said load device comprises an overload protection device for limiting the deformation of said load surface by mechanically limiting the deflection of said load support.

9. A load device according to claims 1-8, **characterized in that** said overload protection device comprises at least one bar fastened to said second side of said load surface in the fastening point of said load support to said first side of said load surface, and wherein said deflection of said bar is limited by an assembly fastened to said second side of said load surface.

10. A load device according to claims 1-9, **characterized in that** said load support is a container.

11. A load device according to claims 1-10, **characterized in that** said load support is a plate.

12. A load device according to claims 1-11, **characterized in that** said load support comprises a slope that focuses an item placed on said load support.

13. A load device according to claims 1-12, **characterized in that** said container comprises a device for emptying the content of said container.

14. A method for measuring the load of a load placed on a load support fastened in a fastening point to a first side of a load surface, wherein the load distribution is measured by at least one load cell fastened to a second side of said load surface in an area surrounding the fastening point of said load support.
